# EUROPEAN PATENT APPLICATION

(11) **EP 1 681 620 A1**
(43) Date of publication of application: **19.07.2006**
(21) Application number: 06000515.4
(22) Date of filing: 11.01.2006
(51) Int. Cl.: G06F 3/033, G06F 3/048

(54) **Methods and devices for retrieving information stored as a pattern**

(30) Priority: 12.01.2005 US 34657; 05.01.2006 WO PCT/US20/06000324
(71) Applicant: Leapfrog Enterprises, Inc., Emeryville, CA 94608-1070 (US)
(72) Inventor: Marggraf, James, Lafayette, CA 94549 (US); Edgecomb, Tracy L., Berkeley, CA 94703 (US); Chisholm, Alexander, San Francisco, CA 94110 (US)
(74) Representative: Ebner von Eschenbach, Jennifer

(57) **Abstract**

Methods and devices for storing, retrieving and using information are described. A pattern of markings on a surface is decoded to recover information encoded by the pattern. A software application associated with the information is identified. The information can then be used with the software application.

## Description

### CROSS REFERENCES TO RELATED APPLICATIONS

This Application is a Continuation-in-Part of the co-pending, commonly-owned U.S. Patent Application, Attorney Docket No. 020824-004610US, Serial No. 10/803,806, filed March 17, 2004, by James Marggraff et al., entitled "Scanning Apparatus," and hereby incorporated by reference in its entirety.

This Application is a Continuation-in-Part of the co-pending, commonly-owned U.S. Patent Application, Attorney Docket No. 020824-009500US, Serial No. 10/861,243, filed June 3, 2004, by James Marggraff et al., entitled "User Created Interactive Interface," and hereby incorporated by reference in its entirety.

### BACKGROUND

### FIELD

Embodiments in accordance with the present writing generally pertain to information storage mediums and to the retrieval and use of stored information. This writing discloses methods and devices for retrieving and using information stored as a pattern on a surface.

### RELATED ART

Devices such as optical readers or optical pens conventionally emit light that reflects off a surface to a detector or imager. As the device is moved relative to the surface (or vice versa), successive images are rapidly captured. By analyzing the images, movement of the optical device relative to the surface can be tracked.

One type of optical pen is used with a sheet of paper on which very small dots are printed. The dots are printed on the page in a pattern with a nominal spacing of about 0.3 millimeters (0.01 inches). The pattern of dots within any region on the page is unique to that region. The optical pen essentially takes a snapshot of the surface, perhaps 100 times a second or more. By interpreting the dot positions captured in each snapshot, the optical pen can precisely determine its position relative to the page.

Applications that utilize information about the position of an optical pen relative to a surface have been or are being devised. An optical pen with Bluetooth or other wireless capability can be linked to other devices and used for sending electronic mail (e-mail) or faxes.

An optical pen may be shipped or sold with a set of pre-loaded software applications. Users will typically be motivated to update the software on their optical pens as new or improved applications become available. However, optical pens may not be equipped to conveniently download information, because of their relatively small size and relatively unique form factor. Thus, adding new software to an optical pen may be somewhat problematic.

### SUMMARY

Accordingly, an optical pen that can be conveniently updated with new or improved software, and/or a method of conveniently updating the software on an optical pen, would be valuable. Embodiments in accordance with the present invention provide this and other advantages.

Embodiments of the present invention pertain to methods for storing, retrieving and using information, and devices thereof. In one embodiment, a pattern of markings on a surface is decoded to recover information encoded by the pattern. A software application associated with the information is identified. The information can then be used with the software application.

In one embodiment, a device such as handheld pen-shaped computer system (e.g., an optical pen) is used to scan the data from a surface (e.g., a piece of paper, etc.). The device contains memory, a processor, a writing instrument and an optical sensor that can read an image on the surface. Data scanned from the surface can be stored in memory and used by one or more applications resident on the device.

For example, parameterization data for an application, or even an application itself, can be encoded as a pattern of markings on a surface such as a piece of paper. The markings can be read (e.g., scanned) by the device (e.g., handheld pen-shaped computer system or optical pen). More precisely, an image of the pattern is captured by the device. The captured image of the markings can then be processed (decoded) to recover the encoded information, which can then be stored in memory on the device. The decoded information can be used, for example, to add an application to the device or to supplement an existing application.

In one embodiment, a surface (e.g., a piece of paper) can be supplied on which certain image themes are printed. Encoded information, as described above, can also be printed on the paper. Using the device (e.g., handheld pen-shaped computer system or optical pen) to scan, decode and store the encoded information, an application program resident on the device can become more customized to the theme of the paper. Alternatively, the user experience provided by interfacing with the application may become in some way relevant to the theme of the paper.

There are many other possible uses for information encoded and decoded in this manner. For example, a message encoded in a pattern of markings can be audibly rendered by scanning and decoding the markings. Alternatively, the information in a pattern of markings can index other, previously stored information (e.g., phonemes) that are used to synthesize an audible message. In the latter instance, new words can be added to the vocabulary of a device without having to download the words themselves, reducing the amount of information to be downloaded.

In general, embodiments in accordance with the present invention provide a convenient and user-friendly mechanism for adding information to devices such as handheld pen-shaped computer system or optical pens, thus expanding the functionalities of the devices beyond those provided when the devices were shipped or sold. These and other objects and advantages of the present invention will be recognized by one skilled in the art after having read the following detailed description, which are illustrated in the various drawing figures.

This writing discloses at least methods and devices for storing, retrieving and using information. A pattern of markings on a surface is decoded to recover information encoded by the pattern. A software application associated with the information is identified. The information can then be used with the software application.

### BRIEF DESCRIPTION OF THE DRAWINGS

The accompanying drawings, which are incorporated in and form a part of this specification, illustrate embodiments of the invention and, together with the description, serve to explain the principles of the invention:
Figure 1 is a block diagram of a device upon which embodiments of the present invention can be implemented.
Figure 2 is a block diagram of another device upon which embodiments of the present invention can be implemented.
Figure 3 shows an exemplary sheet of paper provided with a pattern of marks according to one embodiment of the present invention.
Figure 4 shows an enlargement of a pattern of marks on an exemplary sheet of paper according to one embodiment of the present invention.
Figure 5 shows a region on a surface of, for example, a sheet of paper that can be used to store encoded information according to one embodiment of the present invention.
Figure 6 shows a region on a surface of, for example, a sheet of paper that can be used to store encoded information according to another embodiment of the present invention.
Figure 7 is a flowchart of a computer-implemented method for retrieving encoded information according to one embodiment of the present invention.
Figure 8 shows an exemplary user interface for a software application in accordance with one embodiment of the present invention.
Figure 9 shows an exemplary user interface for another software application in accordance with one embodiment of the present invention.

### DETAILED DESCRIPTION OF THE INVENTION

In the following detailed description of the present invention, numerous specific details are set forth in order to provide a thorough understanding of the present invention. However, it will be recognized by one skilled in the art that the present invention may be practiced without these specific details or with equivalents thereof. In other instances, well-known methods, procedures, components, and circuits have not been described in detail as not to unnecessarily obscure aspects of the present Invention.

Some portions of the detailed descriptions, which follow, are presented in terms of procedures, steps, logic blocks, processing, and other symbolic representations of operations on data bits that can be performed on computer memory. These descriptions and representations are the means used by those skilled in the data processing arts to most effectively convey the substance of their work to others skilled in the art. A procedure, computer executed step, logic block, process, etc., is here, and generally, conceived to be a self-consistent sequence of steps or instructions leading to a desired result. The steps are those requiring physical manipulations of physical quantities. Usually, though not necessarily, these quantities take the form of electrical or magnetic signals capable of being stored, transferred, combined, compared, and otherwise manipulated in a computer system. It has proven convenient at times, principally for reasons of common usage, to refer to these signals as bits, values, elements, symbols, characters, terms, numbers, or the like.

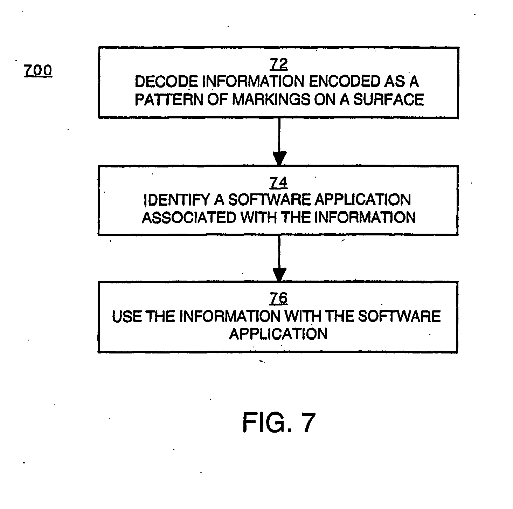

It should be borne in mind, however, that all of these and similar terms are to be associated with the appropriate physical quantities and are merely convenient labels applied to these quantities. Unless specifically stated otherwise as apparent from the following discussions, it is appreciated that throughout the present invention, discussions utilizing terms such as "encoding" or "using" or "identifying" or "accessing" or "rendering" or "reading" or "decoding" or "combining" or "sensing" or "executing" or "supplying" or the like, refer to the actions and processes of a computer system (e.g., flowchart 700 of Figure 7), or similar electronic computing device, that manipulates and transforms data represented as physical (electronic) quantities within the computer system's registers and memories into other data similarly represented as physical quantities within the computer system memories or registers or other such information storage, transmission or display devices.

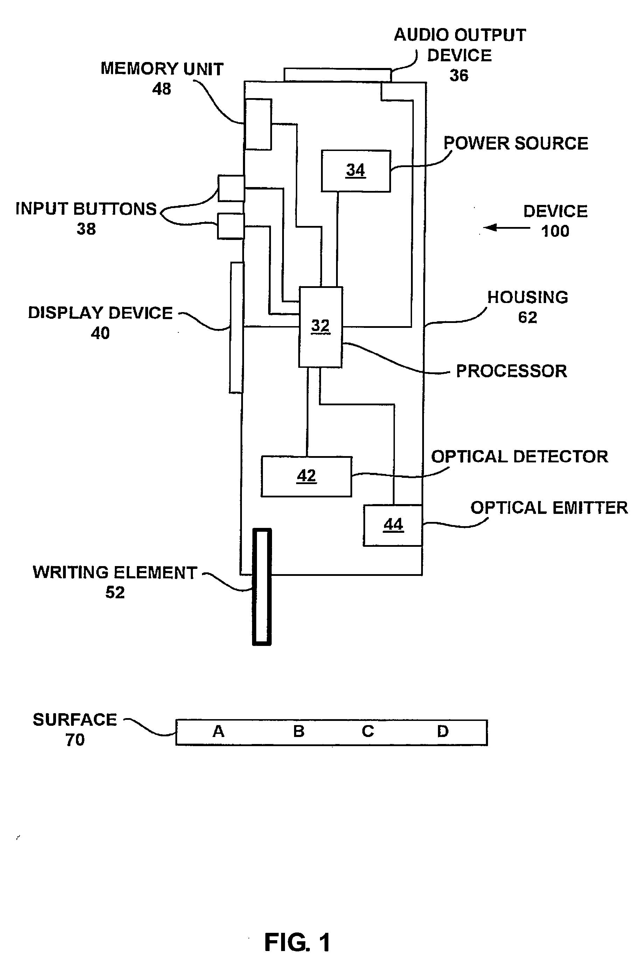

Figure 1 is a block diagram of a device 100 upon which embodiments of the present invention can be implemented. In general, device 100 may be referred to as a pen-shaped computer system or an optical device, or more specifically as an optical reader, optical pen or digital pen.

In the embodiment of Figure 1, device 100 includes a processor 32 inside a housing 62. In one embodiment, housing 62 has the form of a pen or other writing utensil. Processor 32 is operable for processing information and instructions used to implement the functions of device 100, which are described below.

In one embodiment, the device 100 includes an audio output device 36, a display device 40, or both an audio device and display device coupled to the processor 32. In other embodiments, the audio output device and/or the display device are physically separated from device 100, but in communication with device 100 through either a wired or wireless connection. For wireless communication, device 100 can include a transceiver or transmitter (not shown in Figure 1). The audio output device 36 may include a speaker or an audio jack (e.g., for an earphone or headphone). The display device 40 may be a liquid crystal display (LCD) or some other suitable type of display.

In the embodiment of Figure 1, device 100 includes input buttons 38 coupled to the processor 32 for activating and controlling the device 100. For example, the input buttons 38 allow a user to input information and commands to device 100 or to turn device 100 on or off. Device 100 also includes a power source 34 such as a battery.

Device 100 also includes a light source or optical emitter 44 and a light sensor or optical detector 42 coupled to the processor 32. The optical emitter 44 may be a light emitting diode (LED), for example, and the optical detector 42 may be a charge coupled device (CCD) or complementary metal-oxide semiconductor (CMOS) imager array, for example. The optical emitter 44 illuminates surface 70 or a portion thereof. Light reflected from the surface 70 is received at and recorded by optical detector 42.

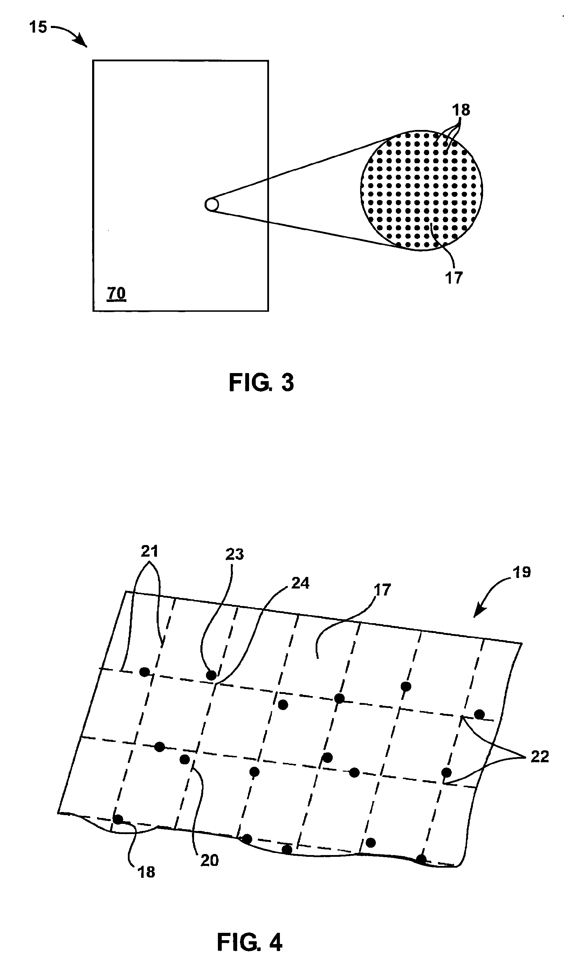

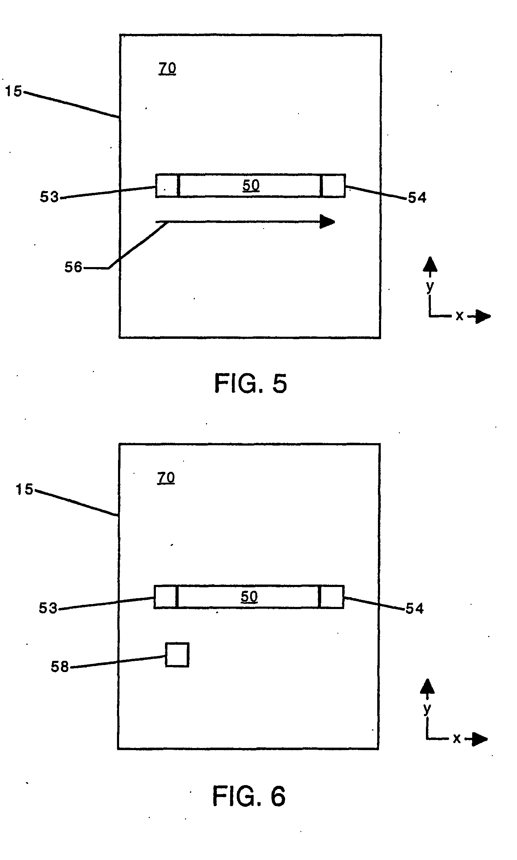

In one embodiment, a pattern of markings is printed on surface 70. The surface 70 may be any suitable surface on which a pattern of markings can be printed, such as a sheet a paper or other types of surfaces. The end of device 100 that holds optical emitter 44 and optical detector 42 is placed against or near surface 70. As device 100 is moved relative to the surface 70, the pattern of markings is read and recorded by optical emitter 44 and optical detector 42. As discussed in more detail further below, in one embodiment, the markings on surface 70 are used to determine the position of device 100 relative to surface 70 (see Figures 3 and 4). In another embodiment, the markings on surface 70 are used to encode information (see Figures 5 and 6). The captured images of surface 70 can be analyzed (processed) by device 100 to decode the markings and recover the encoded information.

Device 100 of Figure 1 also includes a memory unit 48 coupled to the processor 32. In one embodiment, memory unit 48 is a removable memory unit embodied as a memory cartridge or a memory card. In another embodiment, memory unit 48 includes random access (volatile) memory (RAM) and read-only (non-volatile) memory (ROM) for storing information and Instructions for processor 32.

In the embodiment of Figure 1, device 100 includes a writing element 52 situated at the same end of device 100 as the optical detector 42 and the optical emitter 44. Writing element 52 can be, for example, a pen, pencil, marker or the like, and may or may not be retractable. In certain applications, writing element 52 is not needed. In other applications, a user can use writing element 52 to make marks on surface 70, including characters such as letters, numbers, symbols and the like. These user-produced marks can be scanned (imaged) and interpreted by device 100 according to their position on the surface 70. The position of the user-produced marks can be determined using a pattern of marks that are printed on surface 70; refer to the discussion of Figures 3 and 4, below. In one embodiment, the user-produced markings can be interpreted by device 100 using optical character recognition (OCR) techniques that recognize handwritten characters.

Surface 70 may be a sheet of paper, although surfaces consisting of materials other than paper may be used. Surface 70 may be a flat panel display screen (e.g., an LCD) or electronic paper (e.g., reconfigurable paper that utilizes electronic ink). Also, surface 70 may or may not be flat. For example, surface 70 may be embodied as the surface of a globe. Furthermore, surface 70 may be smaller or larger than a conventional (e.g., 8.5x11 inch) page of paper. In general, surface 70 can be any type of surface upon which markings (e.g., letters, numbers, symbols, etc.) can be printed or otherwise deposited. Alternatively, surface 70 can be a type of surface wherein a characteristic of the surface changes in response to action on the surface by device 100.

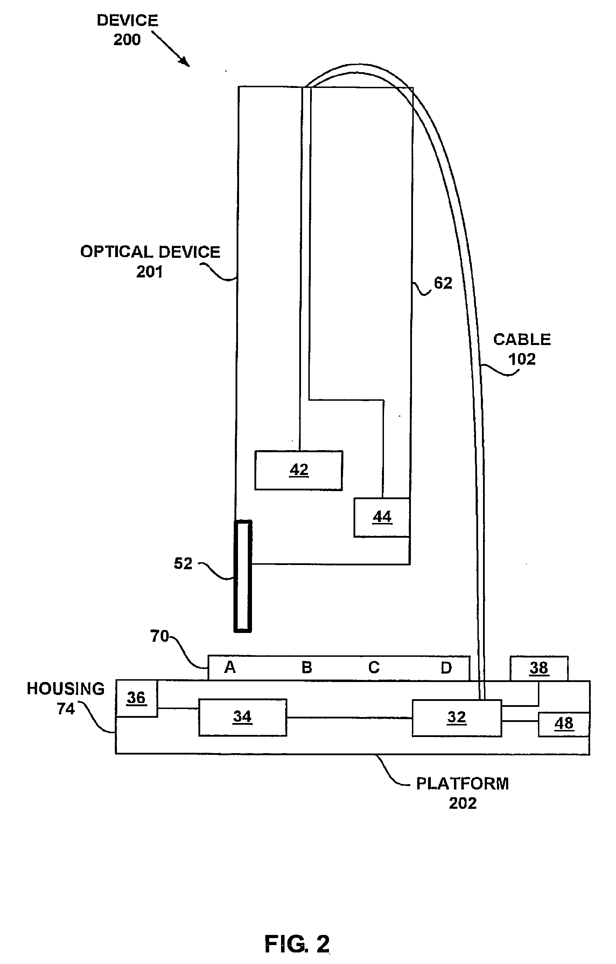

Figure 2 is a block diagram of another device 200 upon which embodiments of the present invention can be implemented. Device 200 includes processor 32, power source 34, audio output device 36, input buttons 38, memory unit 48, optical detector 42, optical emitter 44 and writing element 52, previously described herein. However, in the embodiment of Figure 2, optical detector 42, optical emitter 44 and writing element 52 are embodied as optical device 201 in housing 62, and processor 32, power source 34, audio output device 36, input buttons 38 and memory unit 48 are embodied as platform 202 in housing 74. In the present embodiment, optical device 201 is coupled to platform 202 by a cable 102; however, a wireless connection can be used instead. The elements illustrated by Figure 2 can be distributed between optical device 201 and platform 200 in combinations other than those described above.

Figure 3 shows a sheet of paper 15 provided with a pattern of marks according to one embodiment of the present invention. In the embodiment of Figure 3, sheet of paper 15 is provided with a coding pattern in the form of optically readable position code 17 that consists of a pattern of marks 18. The marks 18 in Figure 3 are greatly enlarged for the sake of clarity. In actuality, the marks 18 may not be easily discernible by the human visual system, and may appear as grayscale on sheet of paper 15. In one embodiment, the marks 18 are embodied as dots; however, the present invention is not so limited.

Figure 4 shows an enlarged portion 19 of the position code 17 of Figure 3. An optical device such as device 100 or 200 (Figures 1 and 2) is positioned to record an image of a region of the position code 17. In one embodiment, the optical device fits the marks 18 to a reference system in the form of a raster with raster lines 21 that intersect at raster points 22. Each of the marks 18 is associated with a raster point 22. For example, mark 23 is associated with raster point 24. For the marks in an image/raster, the displacement of a mark from the raster point associated with the mark is determined. Using these displacements, the pattern in the image/raster is compared to patterns in the reference system. Each pattern in the reference system is associated with a particular location on the surface 70. Thus, by matching the pattern in the image/raster with a pattern in the reference system, the position of the pattern on the surface 70, and hence the position of the optical device relative to the surface 70, can be determined. Additional information is provided by the following patents and patent applications, herein incorporated by reference in their entirety for all purposes: U.S. Patent No. 6,502,756; U.S. Patent Application No. 101179,966 filed on June 26,2002; WO 01/95559; WO 01/71473; WO 01/75723; WO 01/26032; WO 01/75780; WO 01/01670; WO 01/75773; WO 01/71475; WO 01/73983; and WO 01/16691. See also Patent Application No. 60/456,053 filed on March 18, 2003, and Patent Application No. 10/803,803 filed on March 17, 2004, both of which are incorporated by reference in their entirety for all purposes.

With reference back to Figure 1, four positions or regions on surface 70 are indicated by the letters A, B, C and D (these characters are not printed on surface 70, but are used herein to indicate positions on surface 70). There may be many such regions on the surface 70. Associated with each region on surface 70 is a unique pattern of marks. The regions on surface 70 may overlap because even if some marks are shared between overlapping regions, the pattern of marks in a region is still unique to that region.

In the example of Figure 1, using device 100 (specifically, using writing element 52), a user may create a character consisting, for example, of a circled letter "M" at position A on surface 70 (generally, the user may create the character at any position on surface 70). The user may create such a character in response to a prompt (e.g., an audible prompt) from device 100. When the user creates the character, device 100 records the pattern of markings that are uniquely present at the position where the character is created. The device 100 associates that pattern of markings with the character just created. When device 100 is subsequently positioned over the circled "M," device 100 recognizes the pattern of marks associated therewith and recognizes the position as being associated with a circled "M." In effect, device 100 recognizes the character using the pattern of markings at the position where the character is located, rather than by recognizing the character itself.

In one embodiment, the character is associated with a particular command. In the example just described, a user can create (write) a character that identifies a particular command, and can invoke that command repeatedly by simply positioning device 100 over the written character. In other words, the user does not have to write the character for a command each time the command is to be invoked; instead, the user can write the character for a command one time and invoke the command repeatedly using the same written character.

Figure 5 shows a region 50 on a surface 70 (on a sheet of paper 15, for example) that can be used to store encoded information according to one embodiment of the present invention. Although the example of Figure 5 shows a sheet of paper, embodiments in accordance with the present invention can be implemented on other types and shapes of surfaces made of various types of materials, as mentioned above.

Region 50 includes a pattern of marks such as dots. In the embodiment of Figure 5, the pattern of marks is used to store encoded information. More specifically, information is binary encoded (e.g., as bit values of zero or one), and the binary values are translated into a particular pattern of marks that are printed on surface 70. In one embodiment, up to 50 bytes per inch can be stored in region 50. In one embodiment, the information encoded in region 50 is also encrypted.

Surface 70 may contain other information in addition to region 50. For example, surface 70 may contain a pattern of markings such as that described above in conjunction with Figures 3 and 4. That is, some portions of surface 70 can be used to determine the position of an optical pen relative to surface 70, while other portions of surface 70 can be used to store encoded information. Surface 70 can include yet other information. For example, surface 70 may contain text-based or image-based information. As a specific example, surface 70 may be a page in a magazine that contains articles and pictures as well as the patterns of markings referred to above. The theme of the information included on surface 70 may be related to the type of information encoded in region 50.

Region 50 of Figure 5 is identified or labeled in some manner so that a user can conveniently locate it on surface 70. For example, a visible border or margin can be printed around region 50 to delineate the region on the surface 70. The pattern of marks in region 50 is read by passing the optical emitter 44 and optical detector 42 of an optical pen (e.g., device 100 or 200 of Figures 1 and 2) over region 50. The presence of a border helps a user keep the optical pen within region 50 during scanning, so that the pattern of marks in region 50 can be accurately read without stray marks being inadvertently picked up from outside region 50.

In the example of Figure 5, the orientation of region 50 is horizontal; however, other orientations are permitted. Also, in the example of Figure 5, region 50 is substantially rectangular in shape; however, other shapes are possible, including shapes that are curved or non-linear.

In one embodiment, the pattern of marks in region 50 is scanned by passing an optical pen (e.g., device 100 or 200 of Figures 1 and 2) in one direction over region 50. However, depending on how the information is encoded in region 50, the present invention is not so limited. For example, a user may move the optical pen in different directions within region 50. Also, the optical pen may be moved at a constant speed or at varying speeds as the pen is passed over region 50.

In the example of Figure 5, a visual cue such as arrow 56 is used to indicate to a user a direction in which the pattern of marks in region 50 are to be scanned. Visual cues indicating where to begin and where to end the scanning can also be used. Written instructions to assist the user can also be provided.

In one embodiment, region 50 is demarcated by a first tag or region 53 and a second tag or region 54. In an example in which region 50 is read from left to right, region 53 indicates the start of region 50 or the start of the encoded information, and region 54 indicates the end of region 50 or the end of the encoded information, In such an example, an optical pen (e.g., device 100 or 200 of Figures 1 and 2) can be placed against or nearly against region 53 to start the process of scanning region 50. Upon reaching region 54 after traversing the length of region 50, the process of scanning region 50 is ended.

In one embodiment, a unique pattern of marks is associated with each of the regions 53 and 54 of Figure 5, as described previously in conjunction with Figures 3 and 4. In such an embodiment, device 100 or 200 (Figures 1 and 2) is programmed to recognize those unique patterns as being associated with a beginning of encoded information tag and an end of encoded information tag, allowing those tags to be used universally.

There are in effect two dimensions associated with the pattern of marks in region 50. In the example of Figure 5, region 50 is scanned in the x-direction (e.g., left to right). In this example, in one embodiment, linear position within region 50 is encoded in the x-dimension, while information is encoded in the y-dimension. That is, as region 50 is traversed in the x-direction with an optical pen (e.g., device 100 or 200 of Figures 1 and 2), data pairs (x, y) are read and stored by the optical pen. The x-values in each (x, y) pair provide a position along the x-axis within region 50, and the y-values in each (x, y) pair provide a data value (e.g., a binary value) corresponding to the encoded information.

The x-values can be determined by capturing an image of the pattern of marks and interpreting the positions of the marks, as described above in conjunction with Figures 3 and 4. Information can be stored in the y-dimension using a variety of techniques. The y-values can be determined by capturing an image of the pattern of marks and interpreting the marks. For example, the size of the marks can be varied, with a mark of one size indicating a binary value of zero (0) and a mark of another size indicating a binary value of one (1). Alternatively, the distance between marks can be used to indicate binary values. For example, if marks are expected at to be spaced at uniform distances in the y-direction, the absence of a mark can indicate a binary value of 0 while the presence of a mark can indicate a binary value of 1. Alternatively, the displacement of a mark relative to a raster point (refer to Figure 4 above) can be used to indicate one binary value versus another. The optical pen (e.g., device 100 or 200 of Figures 1 and 2) is programmed to interpret whatever encoding scheme is used. Also, the optical pen can check for errors that may occur in the scanning or interpretation of the markings in a region 50.

Depending on the encoding scheme used, knowledge of position within a region 50 may not be necessary.

In the example of Figure 5, a single region 50 is illustrated. However, there may be more than one of such regions on a surface 70. If there are more than one such regions, they may be of different sizes and shapes and they may be oriented differently relative to one another. Also, the regions may be scanned in different directions relative to one another. For example, consider two such regions that are rectangular in shape, with their longer sides oriented horizontally on surface 70 as illustrated in Figure 5, with one region just below the other on surface 70. The first of those regions can be read left to right while the second of the regions is read from right to left, facilitating the scanning of those regions by reducing the amount of movement of an optical pen (e.g., device 100 or 200 of Figures 1 and 2) between the regions.

The information encoded by multiples of region 50 can be divided among those regions. For example, part of the encoded information may be included in a first region 50, while the remainder of the encoded information is included in a second region 50. The first and second regions may or may not be on the same surface 70 (e.g., on the same piece of paper). During decoding and processing of the scanned and encoded information, an optical pen (e.g., device 100 or 200 of Figures 1 and 2) can then integrate the parts.

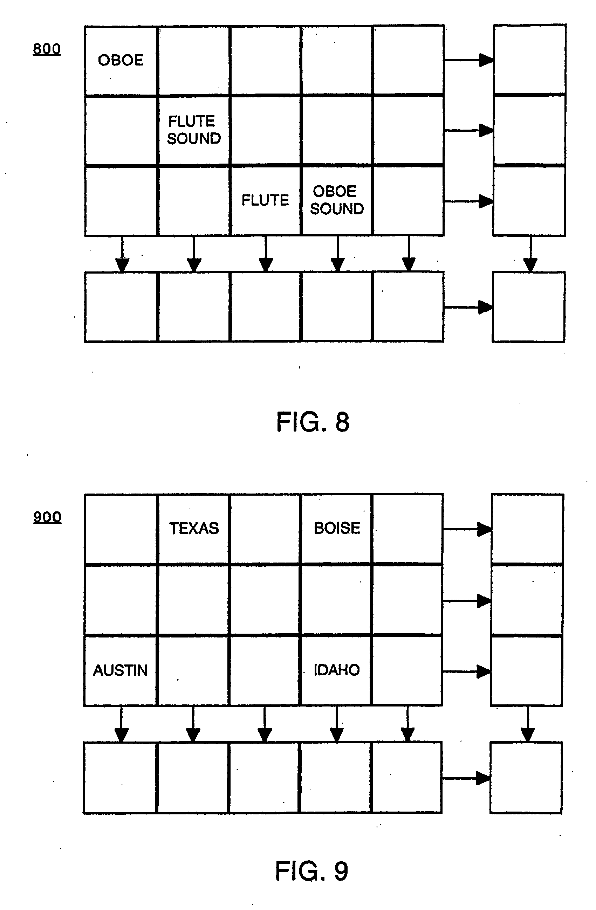

The information encoded by the pattern of marks in region 50 of Figure 5 can be used in a variety of different ways. For example, that information can be used to update an application resident on an optical pen (e.g., device 100 or 200 of Figures 1 and 2), or to add a new application to the optical pen. Also, a new application can be added to the optical pen by populating (parameterizing) an application template previously Installed on the optical pen with the information encoded in a region 50. In these examples, the information encoded in region 50 includes information identifying an application with which it is associated. Information identifying an application can alternatively be included in region 53 or 54. Additional information is provided in conjunction with Figures 8 and 9, below.

The information encoded within region 50 of Figure 5 can also be used for an application referred to herein as "sound swipe." For example, by passing the optical pen (e.g., device 100 or 200 of Figures 1 and 2) through region 50, an audible message encoded by the pattern of marks in region 50 is rendered. An application such as sound swipe can be used in advertising or contest promotions, for example. Also, the audible message encoded by the pattern of marks in region 50 can be used to provide information or feedback to a user as the optical pen is being passed over region 50. For example, as the pattern of marks are being scanned, a beep or similar type of sound (in general, any type of sound) can be audibly rendered - a sound generally recognized as a pleasant sound can be used to indicate that the scanning is being performed correctly, while a sound generally recognized as an unpleasant sound can be used to indicate that the scanning is not proceeding correctly. The speed at which the sound is played can also be used to provide feedback to a user. In general, as a region 50 is being scanned, information relevant to the actions of a user can be encoded in the region 50 and audibly rendered to the user as the user is scanning the pattern of markings.

An audible message rendered from the information in a region 50 can also be used to provide direction or feedback to a user during the act of scanning as part of a software application that the user is executing. In other words, the information encoded in a region 50 can be used to provide audible feedback to a user to indicate how well the pattern of markings is being scanned, or to indicate how well the user is performing in, for example, a gaming application. For example, a user may be using a software application for a maze game, in which the optical pen (e.g., device 100 or 200 of Figures 1 and 2) is moved by the user through a maze that is illustrated on a surface 70. The "walls" of the maze may be regions (such as a region 50) in which the information that is encoded results in a sound being rendered when the optical pen makes contact with a wall. In general, the information encoded in a region 50 can be used to affect the actions of a user as the pattern of markings are being scanned (in the act of scanning).

An audible message can also be used to maintain the user's interest during scanning. As mentioned above, there may be multiples of the regions 50. An audible message, the content of which may be unrelated to the type of information encoded in the regions 50, may be rendered to encourage a user to scan all of the regions. For example, a riddle may be verbalized as the user scans the regions 50, with the solution to the riddle not being provided until all of the regions 50 are scanned.

In each of the examples above, the message that is audibly rendered may be based on information encoded in a region 50 or on information stored on the optical pen (e.g., device 100 or 200 of Figures 1 and 2) or on a combination of the two.

Figure 6 shows a region 58 on a surface 70 (on a sheet of paper 15, for example) according to another embodiment of the present invention. In this embodiment, an application such as sound swipe is used to provide audible directions to a user, to assist the user in scanning region 50. For example, the user can position an optical pen against or nearly against region 58, which includes information encoded as a pattern of marks in a manner similar to that of region 50. In response to the scanning and interpreting of the information encoded in region 58, an audible message is rendered, instructing the user on how to scan region 50. Alternatively, scanning region 58 can invoke a command that causes the optical pen (e.g., device 100 or 200 of Figures 1 and 2) to play a recorded message that instructs the user on how to scan region 50.

Figure 7 is a flowchart 700 of a computer-implemented method for retrieving encoded information according to one embodiment of the present invention. Although specific steps are disclosed in flowchart 700, such steps are exemplary. That is, embodiments of the present invention are well suited to performing various other steps or variations of the steps recited in flowchart 700. It is appreciated that the steps in flowchart 700 may be performed in an order different than presented, and that not all of the steps in flowchart 700 may be performed. In one embodiment, with reference also to Figures 1 and 2, flowchart 700 is implemented by a device such as device 100 or 200 as computer-readable program instructions stored in a memory unit (e.g., memory unit 48) and executed by a processor (e.g., processor 32).

In one embodiment, in step 72, a pattern of markings on a surface is decoded to recover information encoded by the pattern. In one embodiment, the markings are sensed using an optical sensor (e.g., optical detector 42 of Figures 1 and 2). Linear position within the pattern is encoded in a first dimension of the pattern, and the information is encoded in a second dimension of the pattern. The information may include data and/or instructions that may be executed by the processor of the optical pen.

In step 74, a software application associated with the information is identified. For example, the information can include the identity of the software application with which the information is associated.

In step 76, the information or some portion thereof can then be used with the software application. For example, the software application can be executed using the decoded information. This is described further in conjunction with Figures 8 and 9.

Figure 8 shows an exemplary user interface 800 used with a software application installed on an optical pen (e.g., devices 100 and 200 of Figures 1 and 2) in accordance with one embodiment of the present invention. Figure 9 shows an exemplary user interface 900 used with another software application installed on an optical pen (e.g., devices 100 and 200 of Figures 1 and 2) in accordance with one embodiment of the present invention. The user interfaces 800 and 900 may be printed on a sheet of paper, although the present invention is not so limited.

In actuality, the user interfaces 800 and 900 may not include the text-based information (e.g., "oboe," "oboe sound," etc.) that are shown in Figure 8 and 9. To illustrate this by way of an example, an application that can be implemented using an optical pen such as device 100 or 200 of Figure 1 and 2 is referred to herein as "memory match." In a memory match application, a user is presented with an interface such as the interfaces 800 and 900; however, the interfaces 800 and 900 do not include the text-based information shown. The user attempts to match a spoken word (e.g., oboe) with a sound associated with that spoken word (e.g. oboe sound). The user touches the optical pen to one of the positions in the interfaces 800 and 900, and an audible message is generated in response. For example, with reference to Figure 8, if a user touches the optical pen to the position in interface 800 associated with the word "oboe," the word "oboe" is audibly rendered in response, and if a user touches the optical pen to the position in interface 800 associated with the sound of an oboe (e.g., "oboe sound"), the sound of an oboe is audibly rendered in response. The user then touches another position within the interface 800 and another message is audibly rendered; either a word is pronounced, or a sound associated with a word is played. The user proceeds in this manner in an attempt to match the position associated with the word "oboe" with the position associated with the sound of an oboe. The memory match application works in a similar fashion with the interface 900, in which a user attempts to match state names and capitals.

In one embodiment, information encoded in a region 50 (Figure 5) can be used to update an application already installed on device 100 or 200 of Figure 1 and 2. For example, a memory match application in which the names and sounds of musical Instruments are to be located and matched (as in Figure 8) may be installed on device 100 or 200. Information encoded in a region 50 can be used to add new instrument names and sounds to such an application.

Consider an example in which the word "oboe" (specifically, the spoken word "oboe") is to be added to an application such as a memory match application. The spoken word "oboe" can be encoded in a region 50 and added to device 100 or 200 (Figures 1 and 2) as previously described herein. Alternatively, the word "oboe" can be audibly rendered by device 100 and 200 using phonetics-to-speech (PTS) synthesis. In the latter instance, a library or database of phonemes is installed on devices 100 and 200. Each of the phonemes can be uniquely identified in the database using a respective index (e.g., a unique binary value is associated with each phoneme). Thus, the information in a region 50 need only include the indexes of the phonemes that are to be used to synthesize a new word to be added to the device 100 or 200. That is, for example, the information encoded in a region 50 need only identify the indices for the phonemes associated with the word "oboe." This can greatly reduce the amount of information that needs to be encoded in a region 50, relative to the amount of information that would need to be encoded if the spoken word was itself encoded.

The game "Hangman" provides another example of how information in a region 50 (Figure 5) can be used to supplement information already installed on device 100 or 200 of Figure 1 and 2. Information in a region 50 can supplement an application by making the application customized to the surface with which the user is interfacing (e.g., the surface on which the user is writing). For example, a certain list of words that can be used in Hangman may be installed on the device 100 or 200 when the device is shipped or sold. New words to be added to the Hangman application can be encoded in a region 50, and that information can be used to add new words to the list of words used by Hangman by scanning the region 50 with the device 100 or 200. For instance, a preprinted theme can be illustrated on a surface 70 (Figure 5) that contains a region 50, with the words encoded in the region 50 associated with that theme.

As another example, a template for an application can be installed on device 100 or 200 of Figure 1 and 2, and the information encoded in a region 50 (Figure 5) can be used to populate that template with Information that produces a new application. For example, with reference again to Figures 8 and 9, a template for memory match applications can be installed on device 100 or 200 of Figure 1 and 2. The template would define the type of user interface, the types of interactions that occur between the user and the user interface, and the like. In essence, the template would define the structure of a blank user interface which is to be populated with information for a memory match application. Information encoded in a region 50 can be used to populate the template with, for example, the names and sounds of musical instruments to produce a first software application. Information encoded in another region 50 can be used to populate the template with, for example, the names of states and their capitals to produce a second software application. Templates for other types of applications can be similarly defined and populated.

In another example, an application (or an application template) may define certain areas of a surface 70 (Figures 1 and 2) as being regions in which handwritten user input is received. Information encoded in a region 50 can be used to install questions onto device 100 or 200 that can be audibly rendered to the user. The information encoded in a region 50 can also include the correct answers to those questions. In response to hearing a question, the user writes an answer into a designated region of surface 70, using the writing element 52 of device 100 or 200 to write the answer. Upon scanning the handwritten answer, device 100 or 200 can use character recognition techniques to interpret the handwritten answer and compare it to the correct answer.

As another example, a book can be printed on paper that has printed thereon the pattern of markings described above in conjunction with Figures 3 and 4. Each position in the book is associated with a unique pattern of markings (e.g., a unique pattern of dots). Thus, each word in the book is also associated with a unique pattern of markings. A mapping of the words to their respective patterns is stored in a database on device 100 or 200 (Figures 1 and 2). The device 100 or 200 can be used to scan and read the pattern of markings at a particular location in the book, and the mapping can be used to identify the word at that location. Different activities can occur once the word at a location is so identified. For example, the word can be verbalized using device 100 or 200 to identify how the word is pronounced, a definition of the word can be verbalized, or the word can be translated into a different language.

As an alternative to the above, a standardized pattern of markings is established for each word in a database (e.g., a lexicon). In other words, each word in the lexicon is associated with a unique pattern of markings such as those described in conjunction with Figure 5. Thus, a particular pattern of markings uniquely identifies a particular word. The unique pattern of markings for a word may be an encoded version of the word (e.g., an ASCII version of the word) or it may be an index that points to the word inside the lexicon. When a book is printed, both the text of the book and the pattern associated with each word of text are printed; that is, a word and the unique pattern associated with that word are both printed on the page at the same location on the page, so that the word and its associated pattern of markings are physically linked. The device 100 or 200 can be used to scan and read the pattern of markings at a particular location in the book, a word at that location can be identified from the pattern of markings, and applications such as those described above can then be utilized (e.g., the word can be defined, etc.). In general, a unique pattern of markings printed, for example, on a surface 70 can be used to identify an item of content that is located at the same position on surface 70 as the pattern of markings.

The discussion above presents just a few examples of how information encoded in a region 50 (Figure 5) can be used with an optical pen such as devices 100 and 200 of Figures 1 and 2. In general, embodiments in accordance with the present invention provide a convenient and user-friendly mechanism for adding information to optical devices such as optical pens, in order to expand the functionalities of the devices beyond those provided when the devices were shipped or sold as well as enhance the experience of using the devices.

Embodiments of the present invention are thus described. While the present invention has been described in particular embodiments, it should be appreciated that the present invention should not be construed as limited by such embodiments, but rather construed according to the below claims.

## Claims

1. A method of retrieving and using recorded information, said method comprising:
decoding a first pattern of markings on a surface to recover information encoded by said first pattern;
identifying a software application associated with said information; and
using said information with said software application.

2. The method of Claim 1 further comprising combining said information with other information stored in memory for said software application to increase content usable with said software application.

3. The method of Claim 1 further comprising accessing other information indexed by said information encoded by said first pattern, wherein said other information is used with said software application.

4. The method of Claim 3 wherein said other information comprises phonemes used for phonetics-to-speech synthesis.

5. The method of Claim 3 wherein said other information comprises a database used for identifying an item of content located on said surface in proximity to said first pattern of markings.

6. The method of Claim 1 wherein said software application is for audibly rendering information encoded in said first pattern of markings.

7. The method of Claim 1 wherein said surface further comprises a visual cue associated with scanning said first pattern of markings.

8. The method of Claim 1 further comprising audibly rendering a message in response to reading information encoded in a second pattern of markings on said surface, said message comprising directions for scanning said first pattern of markings.

9. A method of retrieving and using recorded information, said method comprising:
decoding a first pattern of markings on a surface to recover first information encoded by said first pattern; and
combining said first information encoded on said surface with second information resident in memory to produce a software application.

10. The method of Claim 9 wherein said first information comprises' information identifying said software application.

11. The method of Claim 9 wherein said second information describes a template for said software application, wherein said combining comprises populating said template with said first information to parameterize said software application.

12. The method of Claim 9 wherein said first information comprises a reference to third information usable with said software application.

13. The method of Claim 12 wherein said third information comprises phonemes used for phonetics-to-speech synthesis.

14. The method of Claim 9 wherein said first pattern is demarcated to indicate a beginning and an ending of said first information.

15. The method of Claim 9 wherein said surface further comprises a visual cue indicating a direction for scanning said first pattern of markings.

16. The method of Claim 9 further comprising audibly rendering a message in response to reading information encoded in a second pattern of markings on said surface, said message comprising directions for scanning said first pattern of markings.

17. A device comprising:
a light-sensitive sensor for receiving light reflected from a surface;
a processor coupled to said sensor; and
a memory coupled to said processor, said memory unit containing instructions that when executed implement a method for retrieving and using recorded information, said method comprising:
sensing a first pattern of markings on said surface;
decoding said first pattern of markings to recover information encoded by said first pattern;
associating said information with a first software application; and
executing said first software application using said information.

18. The device of Claim 17 further comprising a speaker for audibly rendering a message encoded by said first pattern of markings.

19. The device of Claim 17 wherein said method further comprises combining said information with other information stored in said memory for said first software application to increase content associated with said first software application.

20. The device of Claim 17 wherein said executing further comprises populating a template with said information to parameterize a second software application.

21. The device of Claim 17 wherein said method further comprises accessing other information indexed by said information encoded by said first pattern, wherein said other information is used with said first software application.

22. The device of Claim 21 wherein said other information comprises phonemes used for phonetics-to-speech synthesis.

23. The device of Claim 21 wherein said other information comprises a database used for identifying an item of content located on said surface in proximity to said first pattern of markings.

24. The device of Claim 17 wherein said information encoded in said first pattern comprises a beginning tag to indicate a beginning of said information and an ending tag to indicate an ending of said information.

25. The device of Claim 17 wherein said surface further comprises a visual cue indicating a direction said sensor is to be moved across said first pattern.

26. The device of Claim 17 further comprising a speaker for audibly rendering a message in response to said sensor sensing a second pattern of markings on said surface, said message comprising directions for reading said first pattern of markings.

27. A pen-shaped device comprising:
an optical sensor for detecting images on a surface;
a processor coupled to said optical sensor; and
a memory coupled to said processor, said memory unit containing instructions that when executed implement a method for retrieving and using recorded information from said surface, said method comprising:
using said optical sensor to sense encoded data representing said recorded information from said surface;
decoding said encoded data to recover said recorded information wherein said recorded information identifies a software application resident in said memory; and
supplying a portion of said recorded information to said software application.

28. A device as described in Claim 27 wherein said method further comprises executing said software application using said portion of said recorded information.

29. A device as described in Claim 27 wherein said surface comprises printed images thereon and wherein said portion of said recorded information causes said software application to execute in a manner related to said images.

30. A device as described in Claim 27 wherein said surface comprises printed images thereon and wherein said portion of said recorded information comprises data related to said images.

31. A device as described in Claim 27 wherein said recorded information further comprises program code executable by said processor.

32. A device as described in Claim 27 wherein said recorded information further comprises parameterization data for altering execution of said software application.

33. A device as described in Claim 27 wherein said memory comprises a plurality of software applications.

34. A device as described in Claim 27 wherein said memory comprises a database of information and wherein said surface comprises a standardized template printed thereon and wherein said portion of said recorded information provides an association between elements of said template and elements of said database.

35. A device as described in Claim 27 wherein said memory comprises a database of information and wherein said encoded data comprises an index that points to an item in said database.
